# EUROPEAN PATENT APPLICATION

(11) **EP 4 427 962 A1**
(43) Date of publication of application: **11.09.2024**
(21) Application number: 24161622.6
(22) Date of filing: 05.03.2024
(51) Int. Cl.: B60K 1/04

(54) **3-POINT ISOLATED EV BATTERY MOUNT FOR TORSIONALLY FLEXIBLE CHASSIS**

(30) Priority: 06.03.2023 US 202363450107 P
(71) Applicant: Bollinger Motors Inc., Detroit, MI 48237 (US)
(72) Inventor: Junga, Anthony, Grosse Pointe Farms, 48236 (US); Mather, Philip B., Clarkston, 48348 (US); Peruri, Hara, Troy, 48084 (US); Burger, Frank, Ortonville, 48462 (US)
(74) Representative: IP Maison

(57) **Abstract**

A battery mount system for a battery pack on an electric vehicle. The system isolates the battery with a three point mount whereby the battery pack stresses are then reduced while maintaining torsional flexibility of the chassis. By mounting the batteries between the frame rails, they are better protected. The present system allows an electric vehicle chassis to remain flexible in twist (torsion) along the longitudinal axis while containing one or more rigid battery packs inside and/or underneath the frame rails, reducing stress and force on the battery packs. Bushings are mounted either on the chassis or on the battery. There are two bushings or brackets on either the front or rear of the battery, and one bushing on either the front or rear of the battery, (i.e. 2 on the front, 1 in the rear, or 1 in the front, 2 in the rear).

## Description

### CROSS REFERENCE TO RELATED APPLICATIONS

This application claims priority to 63/450,107, filed on March 6, 2023, which is expressly incorporated by reference herein for all purposes.

### TECHNICAL FIELD

The present specification generally relates a vehicle chassis and, more specifically, to a battery mount for a torsionally flexible chassis

### BACKGROUND

Commercial truck chassis are typically long, narrow frame rails connected by lateral cross members. They are designed to be stiff when a load is applied vertically to them, but in order to maintain durability, they need to be flexible in torsion longitudinally. If battery packs are rigidly mounted to the frame rails, the frame may become too rigid. This would apply excessive force and stress on the battery packs.

Accordingly, there exists a need in the art to provide an improved battery mounting system overcoming the aforementioned disadvantages.

### SUMMARY

A battery mount system for a battery pack on an electric vehicle is provided. The system isolates the battery with a three-point mount whereby the battery pack stresses are then reduced while maintaining torsional flexibility of the chassis. By mounting the batteries between the frame rails, they are better protected. The present system allows an electric vehicle chassis to remain flexible in twist (torsion) along the longitudinal axis while containing one or more rigid battery packs inside and/or underneath the frame rails, reducing stress and force on the battery packs. Bushings are mounted either on the chassis or on the battery. There are two bushings or brackets on either the front or rear of the battery, and one bushing on either the front or rear of the battery, (i.e. 2 on the front, 1 in the rear, or 1 in the front, 2 in the rear).

A battery mount system for an electric vehicle having a three-point mount configured to isolate a battery pack within the electric vehicle wherein the three-point mount reduces stresses on the battery pack while maintaining torsional flexibility of the electric vehicle chassis wherein the battery pack is mounted between frame rails of the electric vehicle to provide protection, wherein the three-point mount comprises two bushings or brackets positioned on either the front or rear of the battery pack, and one bushing positioned on the opposite end of the battery pack. In some embodiments, the bushings are mounted on the chassis of the electric vehicle. In some embodiments, the bushings are mounted on the battery pack. In some embodiments, the battery pack is mounted underneath the frame rails of the electric vehicle. In some embodiments, the battery pack is mounted inside the frame rails of the electric vehicle. In some embodiments, the three-point mount allows the electric vehicle chassis to remain flexible in twist along the longitudinal axis. In some embodiments, the battery pack comprises one or more rigid battery packs. In some embodiments, three-point mount reduces stress and force on the battery pack during operation of the electric vehicle.

### Brief Description of the Drawings

The embodiments set forth in the drawings are illustrative and exemplary in nature and not intended to limit the subject matter. The following detailed description of the illustrative embodiments can be understood when read in conjunction with the following drawings, where like structure is indicated with like reference numerals and in which:
FIG. 1 depicts a perspective view of the bushing on the battery with the brackets on the chassis according to one or more embodiments shown and described herein;
FIG. 2 depicts a side view of the bushing connected to the chassis with the brackets on the battery according to one or more embodiments shown and described herein;
FIG. 3 depicts a perspective view of the bushing (dual mount side) according to one or more embodiments shown and described herein;
FIG. 4 depicts a perspective view of the one piece bushing (single end position) according to one or more embodiments shown and described herein;
FIG. 5 depicts a side view of the bushings mounted on the battery and the brackets mounted on the chassis (lower chassis brackets not shown) according to one or more embodiments shown and described herein;
FIG. 6 depicts a top view of the three mounts according to one or more embodiments shown and described herein;
FIG. 7 depicts a perspective view of the mounts according to one or more embodiments shown
and described herein; and
FIG. 8 depicts a side view of the mounts according to one or more embodiments shown and described herein.
FIG. 9. depicts a top view of the three mounts according to one or more embodiments shown and described herein;

### DETAILED DESCRIPTION

The present specification discloses an improved mount system by isolating the packs with a three point mount, the battery pack stresses are reduced while maintaining torsional flexibility of the chassis. Current battery packs are mounted on top of, underneath, or next to the frame rails. By mounting the batteries between the frame rails, they are better protected. However, if the batteries are rigidly mounted, the frame may become too stiff. This mounting strategy will allow the frame to remain flexible in torsion allowing the frame to work as designed while reducing forces and stress on the battery structures. The present design allows commercial truck chassis to remain flexible in twist (torsion) along the longitudinal axis while containing one or more rigid battery packs inside and/or underneath the frame rails, reducing stress and force on the battery packs.

Bushings are mounted either on the chassis or on the battery. There are two bushings or brackets on either the front or rear of the battery, and one bushing on either the front or rear of the battery, (i.e. 2 on the front, 1 in the rear, or 1 in the front, 2 in the rear).

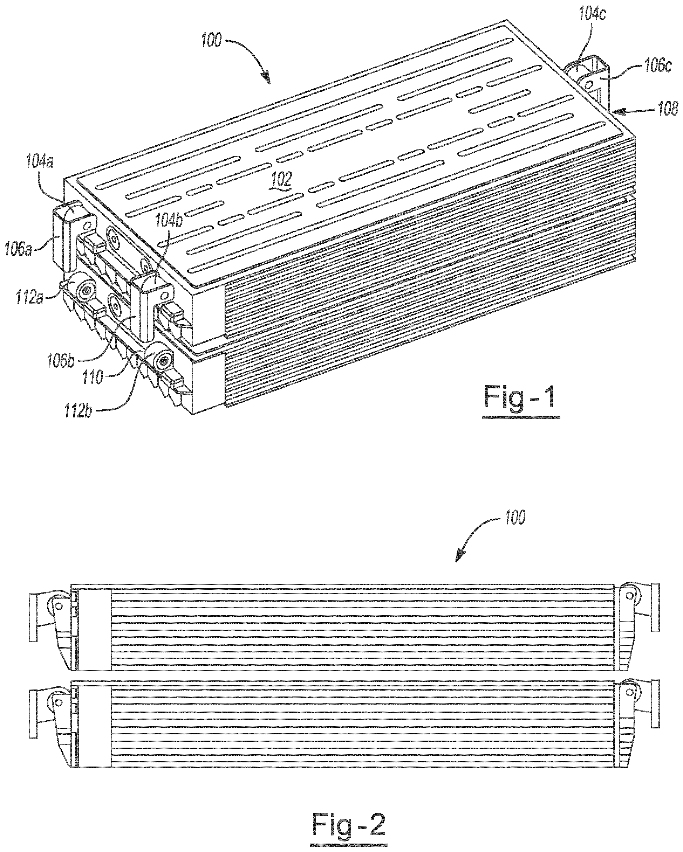

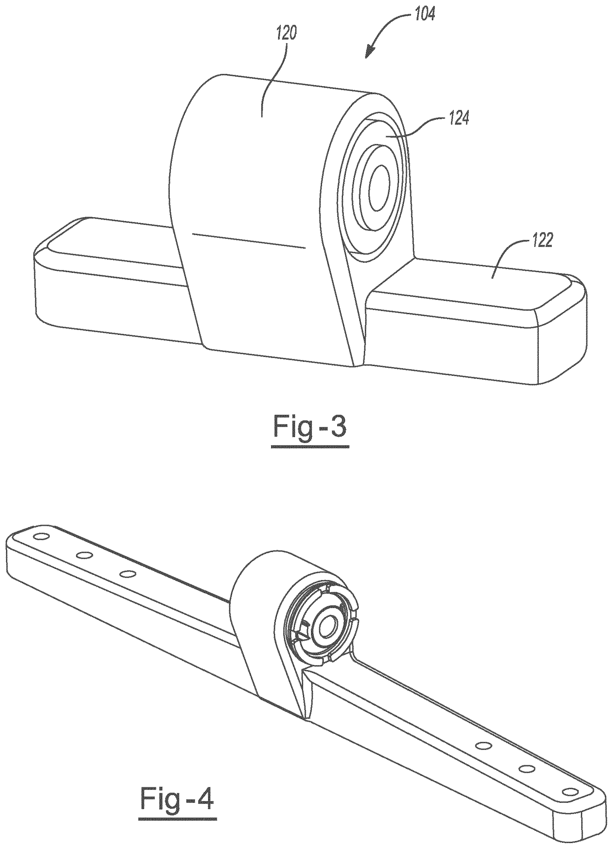

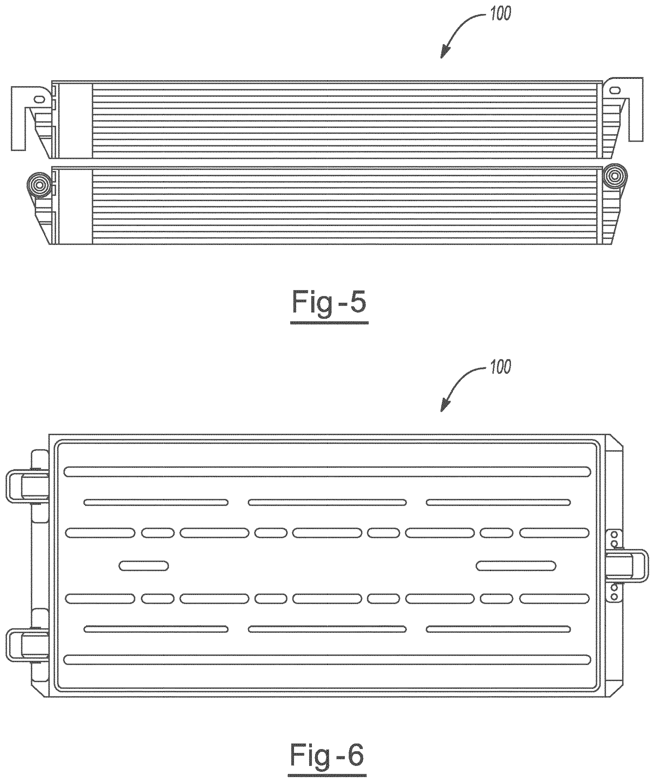

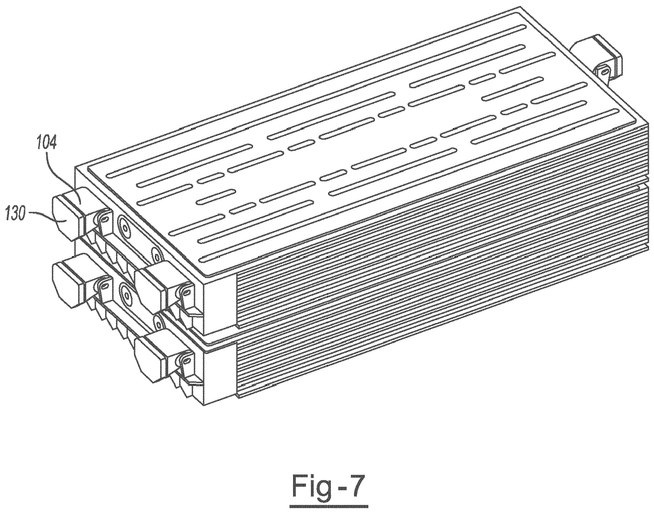

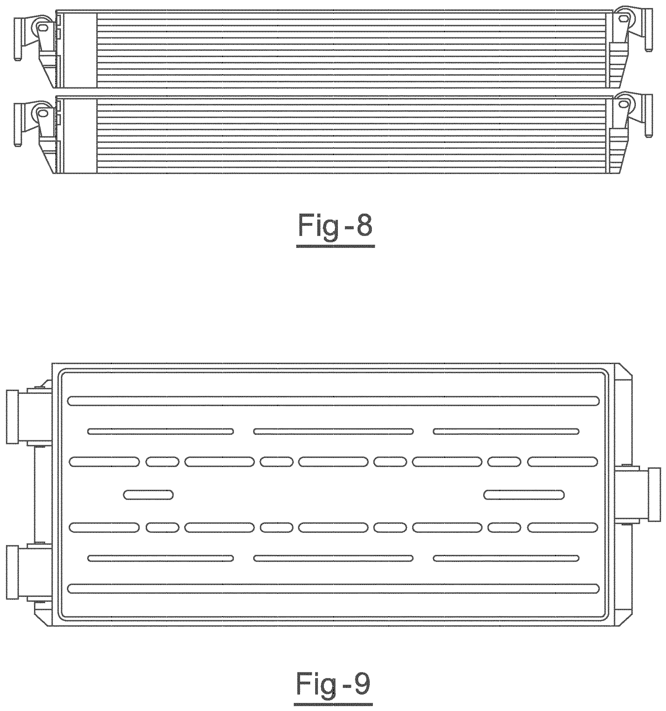

There are two potential embodiments as shown by the attached figures: 1) The bushings are held in place by a bushing structure (Figs. 3 and 4) on the battery (Figs. 1, 5, and 6), or 2) the bushing are held in place mounted directly to the chassis (Figs. 2, 7, 8, and 9). The bushing structure, as shown in detail in Figs. 3 and 4 remains consistent.

In the first embodiment as shown in Figs. 1, 5, and 6, a battery pack assembly 100 includes the battery pack(s) 102. The bushings 104 (104A, 104B, 104C) are connected to the battery pack 102 via a mount 108, 112 (shown connected to the upper and lower battery packs). Brackets 106 (106A, 106B, 106C) are connected to each bushing 104 (104A, 104B, 104C) respectively. The brackets 106 (106A, 106B, 106C) are then configured to connect to the chassis.

In the second embodiment as shown in Figs. 2, 7, 8, and 9, the bushings are mounted directly to the chassis (not shown). This is a reverse combination as previously disclosed. The bushings connect to a bracket 130 and the bracket 130 mounts directly to the chassis.

The bushings/brackets are fixed to the chassis and allow the chassis to flex around the battery without applying excess force to the battery structure.

Each one piece bracket and bushing assembly 104 (casted together) includes a first housing portion 120 and a second housing portion 122, wherein they are combined together as a one piece construction. The first housing portion 120 is generally rounded to accommodate the bushing 124 which seats tightly within the first housing portion 120. The second housing portion 122 is integrally connected to the first housing portion 120 and is configured to connect to the mounting bracket 108 (which is configured to connect to the battery pack(s) 102).

Although the embodiments of the present invention have been illustrated in the accompanying drawings and described in the foregoing detailed description, it is to be understood that the present invention is not to be limited to just the embodiments disclosed, but that the invention described herein is capable of numerous rearrangements, modifications and substitutions without departing from the scope of the claims hereafter. The claims as follows are intended to include all modifications and alterations insofar as they come within the scope of the claims or the equivalent thereof.

It is noted that the terms "substantially" and "about" may be utilized herein to represent the inherent degree of uncertainty that may be attributed to any quantitative comparison, value, measurement, or other representation.

These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the spirit and scope of the claimed subject matter.

Unless otherwise stated, any numerical values recited herein include all values from the lower value to the upper value in increments of one unit provided that there is a separation of at least 2 units between any lower value and any higher value. As an example, if it is stated that the amount of a component, a property, or a value of a process variable such as, for example, temperature, pressure, time and the like is, for example, from 1 to 90, preferably from 20 to 80, more preferably from 30 to 70, it is intended that intermediate range values such as (for example, 15 to 85, 22 to 68, 43 to 51, 30 to 32 etc.) are within the teachings of this specification. Likewise, individual intermediate values are also within the present teachings. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner. As can be seen, the teaching of amounts expressed as "parts by weight" herein also contemplates the same ranges expressed in terms of percent by weight. Thus, an expression in the Detailed Description of the Invention of a range in terms of at "'x' parts by weight of the resulting polymeric blend composition" also contemplates a teaching of ranges of same recited amount of "x" in percent by weight of the resulting polymeric blend composition."

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The term "consisting essentially of" to describe a combination shall include the elements, ingredients, components, or steps identified, and such other elements ingredients, components or steps that do not materially affect the basic and novel characteristics of the combination. The use of the terms "comprising" or "including" to describe combinations of elements, ingredients, components, or steps herein also contemplates embodiments that consist essentially of, or even consist of the elements, ingredients, components or steps.

Plural elements, ingredients, components, or steps can be provided by a single integrated element, ingredient, component or step. Alternatively, a single integrated element, ingredient, component, or step might be divided into separate plural elements, ingredients, components or steps. The disclosure of "a" or "one" to describe an element, ingredient, component, or step is not intended to foreclose additional elements, ingredients, components or steps. All references herein to elements or metals belonging to a certain group refer to the Periodic Table of the Elements published and copyrighted by CRC Press, Inc., 1989. Any reference to the group or groups shall be to the group or groups as reflected in this Periodic Table of the Elements using the IUPAC system for numbering groups.

While particular embodiments have been illustrated and described herein, it should be understood that various other changes and modifications may be made without departing from the spirit and scope of the claimed subject matter.

Moreover, although various aspects of the claimed subject matter have been described herein, such aspects need not be utilized in combination.

It is therefore intended that the appended claims (and/or any future claims filed in any utility application) cover all such changes and modifications that are within the scope of the claimed subject matter.

Moreover, although various aspects of the claimed subject matter have been described herein, such aspects need not be utilized in combination.

It is therefore intended that the appended claims cover all such changes and modifications that are within the scope of the claimed subject matter.

## Claims

1. A battery mount system for an electric vehicle comprising:
a three-point mount configured to isolate a battery pack within the electric vehicle; wherein the three-point mount reduces stresses on the battery pack while maintaining torsional flexibility of the electric vehicle chassis;
wherein the battery pack is mounted between frame rails of the electric vehicle to provide protection;
wherein the three-point mount comprises two bushings or brackets positioned on either the front or rear of the battery pack, and one bushing positioned on the opposite end of the battery pack.

2. The battery mount system of claim 1, wherein the bushings are mounted on the chassis of the electric vehicle.

3. The battery mount system of claim 1, wherein the bushings are mounted on the battery pack.

4. The battery mount system of claim 1, wherein the battery pack is mounted underneath the frame rails of the electric vehicle.

5. The battery mount system of claim 1, wherein the battery pack is mounted inside the frame rails of the electric vehicle.

6. The battery mount system of claim 1, wherein the three-point mount allows the electric vehicle chassis to remain flexible in twist along the longitudinal axis.

7. The battery mount system of claim 1, wherein the battery pack comprises one or more rigid battery packs.

8. The battery mount system of claim 1, wherein the three-point mount reduces stress and force on the battery pack during operation of the electric vehicle.
